Europäisches Patentamt

European Patent Office

Office européen des brevets

(11) Publication number: **0 084 976**
**B1**

(12) **EUROPEAN PATENT SPECIFICATION**

(45) Date of publication of patent specification: **21.01.87**

(51) Int. Cl.⁴: **H 02 K 15/02**

(21) Application number: **83300370.0**

(22) Date of filing: **25.01.83**

(54) **Method of manufacturing the rotor for AC generator.**

| | |
|---|---|
| (30) Priority: **27.01.82 JP 10092/82** | (73) Proprietor: **Hitachi, Ltd.**<br>**5-1, Marunouchi 1-chome**<br>**Chiyoda-ku Tokyo 100 (JP)** |
| (43) Date of publication of application:<br>**03.08.83 Bulletin 83/31** | |
| | (72) Inventor: **Yamada, Shigeki**<br>**2593, Tsuda**<br>**Katsuta-shi (JP)**<br>Inventor: **Sadasue, Masayasu**<br>**1166-196, Inada** |
| (45) Publication of the grant of the patent:<br>**21.01.87 Bulletin 87/04** | **Katsuta-shi (JP)**<br>Inventor: **Watanabe, Yasuaki**<br>**1416-2, Tabiko**<br>**Katsuta-shi (JP)** |
| (84) Designated Contracting States:<br>**DE GB** | |
| (56) References cited:<br>**EP-A-0 038 728**<br>**DE-A-3 008 454**<br>**GB-A-2 023 354** | (74) Representative: **Baillie, Iain Cameron et al**<br>**c/o Ladas & Parry Isartorplatz 5**<br>**D-8000 München 2 (DE)** |

Courier Press, Leamington Spa, England.

**Description**

The present invention relates to a method of manufacturing the rotor for AC generators, or more in particular to a method of coupling the yoke and the nail-shaped magnetic poles of the rotor of an AC generator for vehicles including the automobile.

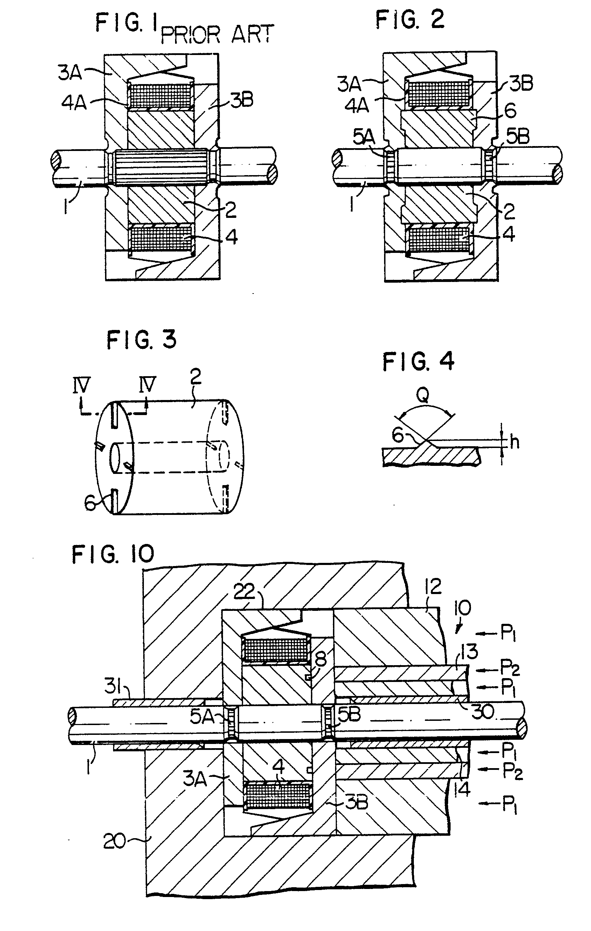

An example of a conventional rotor for the AC generator for vehicles is shown in Fig. 1. In this drawing, a cylindrical yoke 2 and nail-shaped magnetic poles 3A, 3B are secured to a rotary shaft 1 which has a knurled central part and annular slots on the sides thereof. In the space between the nail-shaped magnetic poles 3A and 3B, a coil frame 4A of an insulating material within which a field coil 4 is wound is fixed on the outer periphery of the cylindrical yoke 2. The ends of this field coil are connected to a collector ring not shown. The shown rotor is for the AC generator of rotary field type.

In the conventional rotor shown above, the cylindrical yoke 2 and the nail-shaped magnetic poles 3A, 3B are press-fitted and secured to the rotary shaft 1 by the knurling formed on the rotary shaft 1. In this case, the yoke 2 and the magnetic poles 3A and 3B are mechanically connected to the rotary shaft 1 independently by the knurling, whereas the engagement between the yoke and the nail-shaped magnetic poles is not considered. In the event that the sides of the cylindrical yoke 2 and the inner sides of the nail-shaped magnetic poles 3A, 3B are not sufficiently flat, therefore, the yoke and the magnetic poles are in contact with each other only in a very small area, thereby deteriorating the coupling therebetween. Further, if the knurling apertures of the cylindrical yoke 2 and the nail-shaped magnetic poles 3A, 3B are eccentric or have a dimensional error, the rotary shaft press-fitted into the aperture of the nail-shaped magnetic pole 3A from the left side in Fig. 1, for instance, may be caught at the entrance of the aperture of the yoke 2, so that the fitting load is increased (to 5 to 6 tons) thereby bending the rotary shaft 1. In addition, the increased press-fitting load causes a gap reducing the magnetic coupling between the yoke and the magnetic poles, thus deteriorating the adherence therebetween.

In order to eliminate the gap between the cylindrical yoke and the nail-shaped magnetic poles, a solution may be to apply pressure to the nail-shaped magnetic poles 3A, 3B from the outside thereof thereby to forcibly deform the nail-shaped magnetic poles 3A, 3B for an improved adherence between the yoke and magnetic poles. Since the nail-shaped magnetic poles are securely fixed on the rotary shaft 1 by the knurling, however, the pressure fails to be applied uniformly to the sides of the cylindrical yoke 2. Further, when the outside pressure is released, the nail-shaped magnetic poles 3A, 3B are likely to restore the original position thereof by the elasticity thereof mainly at the part thereof fixed on the knurling. Therefore, it is impossible to eliminate the gap completely.

The gap generated in this way in the magnetic coupling undesirably increases the magnetic loss in the form of magnetic reluctance, thereby causing variations of the output characteristic of the generator. Also, allowing for the gap in the magnetic coupling, the generator has to be designed with an adequate field magnetic flux margin (i.e. a larger size), and this hampers the size reduction of the generator.

Another method of manufacturing the rotor for the AC generator is disclosed in DE—A—3008454 (corresponding to US—A—4339873).

In Fig. 19 or 20 of DE—A—3008454, the nail-shaped magnetic poles are projected outside in advance or the inner part of the cylindrical yoke is recessed from the peripheral part thereof. The nail-shaped magnetic poles are arranged on the sides of the cylindrical yoke, and a rotor shaft slightly smaller in diameter than the apertures of the yoke and the nail-shaped magnetic poles is inserted into the apertures. Pressure is applied from the outside of the nail-shaped magnetic poles so that part of the nail-shaped magnetic poles flows into the slots of the rotary shaft by plastic deformation thereby to secure the magnetic poles on the rotary shaft. In the rotor of this construction, the cylindrical yoke is loosely fitted on the rotary shaft and adapted to be fixed by being held by the nail-shaped magnetic poles under pressure, so that the curving of the rotary shaft which otherwise might occur is prevented at the time of manufacturing the rotor. In view of the fact that the sides of the cylindrical yoke or the nail-shaped magnetic poles are not necessarily normal to the rotary shaft as mentioned above and that the nail-shaped magnetic poles are fixed only by the part thereof proximate to the rotary shaft flowing into the slots of the rotary shaft by plastic deformation, however, a gap may still occur between the yoke and the nail-shaped magnetic poles. Even if pressure is applied from the outside of the nail-shaped magnetic poles after manufacture of the rotor in order to prevent the gap from being formed, the release of the pressure causes the above-mentioned elasticity to act on the nail-shaped magnetic poles, thus making it impossible to completely eliminate the gap.

In any of the above-described rotors, any positive means for stopping the relative motion between the cylindrical yoke and the nail-shaped magnetic poles are not provided in the contact therebetween except the frictional resistance therebetween. In AC generators for vehicles which have a rotor rotating at the high speed of about 15,000 r.p.m., the yoke is apt to rotate relatively with the nail-shaped magnetic poles at the time of start or stop of rotation. This inconvenience cannot be obviated by any of the rotors mentioned above.

An object of the present invention is to provide a method of manufacturing a highly reliable rotor for AC generators which alleviates these problems at least to some extent.

According to a first aspect of the present invention there is provided a method of manufacturing a rotor for AC generators, comprising the steps of: forming the sides of a cylindrical yoke substantially parallelly to each other, said yoke having an aperture to introduce a rotary shaft, and the diameter of the aperture being slightly larger than that of said rotary shaft so that said yoke is loosely fitting on said rotary shaft; providing a pair of nail-shaped magnetic poles each thereof having an aperture to introduce said rotary shaft; fitting said yoke and said pair of magnetic poles on said rotary shaft so that said pair of magnetic poles are arranged on the sides of said yoke; and securing only said pair of magnetic poles to said rotary shaft; characterized in that a selected one of at least a protrusion and a groove is formed on at least one of the sides of said yoke; and that said nail-shaped magnetic poles are pressed against said yoke after said fitting whereby plastic deformation of part of said magnetic poles is caused by way of the selected one of the protrusion and the groove of said yoke.

According to a second aspect of the present invention there is provided a method of manufacturing a rotor for AC generators, comprising the steps of: forming the inner sides of a pair of nail-shaped magnetic poles substantially perpendicular to the rotary axis, each of said magnetic poles having an aperture to introduce a rotary shaft (1); fitting said pair of magnetic poles on said rotary shaft so that the inner sides of said pair of magnetic poles oppose each other; and securing said pair of magnetic poles to said rotary shaft; characterized in that a selected one of at least a protrusion and a groove is formed in the inner side of at least one of said magnetic poles; and that said pair of nail-shaped magnetic poles are pressed from outside thereof after said fitting whereby plastic deformation in part of the inner side of the other nail-shaped magnetic pole is caused by way of the selected one of said protrusion and said groove.

According to a further aspect of the present invention there is provided a method of manufacturing a rotor for AC generators, comprising the steps of: forming the sides of a cylindrical yoke substantially parallelly to each other, said yoke having an aperture to introduce a rotary shaft, and the diameter of the aperture being slightly larger than that of said rotary shaft so that said yoke is loosely fitting on said rotary shaft; providing a pair of nail-shaped magnetic poles each thereof having an aperture to introduce said rotary shaft; fitting said yoke and said pair of magnetic poles on said rotary shaft so that said pair of magnetic poles are arranged on the sides of said yoke; and securing only one of said poles to said rotary shaft; characterized in that a selected one of at least a protrusion and a groove is formed on both sides of said yoke; and that said nail-shaped magnetic poles are pressed against said yoke after said fitting whereby plastic deformation of part of said magnetic poles is caused by way of the selected one of the protrusion and the groove of said yoke.

The above and other objects, features and advantages of the present invention will be made apparent by the detailed description taken in conjunction with the accompanying drawings, in which:

Fig. 1 is a sectional view of a conventional rotor for AC generators of rotary field type;

Fig. 2 is a sectional view showing an embodiment of the rotor for AC generators according to the present invention;

Fig. 3 is a perspective view showing an example of the construction of the protrusions formed on the cylindrical yoke of Fig. 2;

Fig. 4 is a sectional view taken in line IV—IV in Fig. 3;

Fig. 5 is a sectional view illustrating an example of the method of manufacturing the rotor shown in Fig. 2;

Fig. 6 is a front view showing another example of the construction of the protrusion formed on the cylindrical yoke shown in Fig. 2;

Fig. 7 is a sectional view schematically showing the essential parts of another embodiment of the present invention;

Figs. 8A, 8B are front views showing examples of the construction of the grooves formed in the cylindrical yoke;

Figs. 9A, 9B are sectional views taken in line IX—IX showing examples of the form of the grooves shown in Fig. 8A;

Fig. 10 is a sectional view showing an example of the method of manufacturing the rotor having grooves in the cylindrical yoke;

Fig. 11 is a sectional view showing another example of the method of manufacturing the rotor having grooves in the cylindrical yoke; and

Fig. 12 is a sectional view showing another embodiment of the rotor for AC generators according to the present invention.

An embodiment of the rotor for AC generators according to the present invention is shown in Fig. 2. This embodiment is a rotor for AC generators of 800 W, 60 A. In the drawing, reference numeral 1 designates a rotary shaft having a pair of annular cut portions 5A, 5B which are knurled inside as required. Reference numeral 2 designates a cylindrical yoke of mild steel SAE1006 having the Rockwell hardness of 35 to 40. The cylindrical yoke 2 has at the rotational center thereof an aperture for receiving the rotor shaft 1, which aperture is slightly larger in diameter than the rotary shaft 1. The cylindrical yoke 2 is loosely fitted on the rotary shaft 1 by this aperture. Reference numerals 3A, 3B designate a pair of nail-shaped magnetic poles made of mild steel of SAE1006 which is tempered after being cold-rolled thereby to attain the Rockwell hardness of 24 to 25. The nail-shaped magnetic poles 3A, 3B also have an aperture slightly larger in diameter than the rotary shaft 1 for receiving the rotary shaft 1. The space between the nail-shaped magnetic poles 3A and 3B on the outer periphery of the cylindrical yoke 2 contains an insulative coil frame 4A in which a field coil 4 is wound. The ends of this field coil 4 are connected to a collector ring not shown thereby to form a rotor. The cylindrical yoke 2 and the nail-shaped magnetic poles 3A, 3B make up magnetic paths. The feature of this embodiment lies in the fact that the cylindrical yoke 2 is loosely fitted on the rotary shaft 1 but not press-fitted thereon. With the nail-shaped magnetic poles 3A, 3B in close contact with the cylindrical yoke 2 under pressure, the protrusions 6 formed on the cylindrical yoke 2 are used in such a manner that the yoke 2 and the magnetic poles 3A, 3B are adhered to each other by the plastic deformation of the inner sides of the nail-shaped magnetic poles 3A, 3B. The nail-shaped magnetic poles 3A, 3B, while maintaining the adherence, are coupled by caulking to the cut portions 5A, 5B of the rotary shaft 1 and thus are secured to the rotary shaft 1.

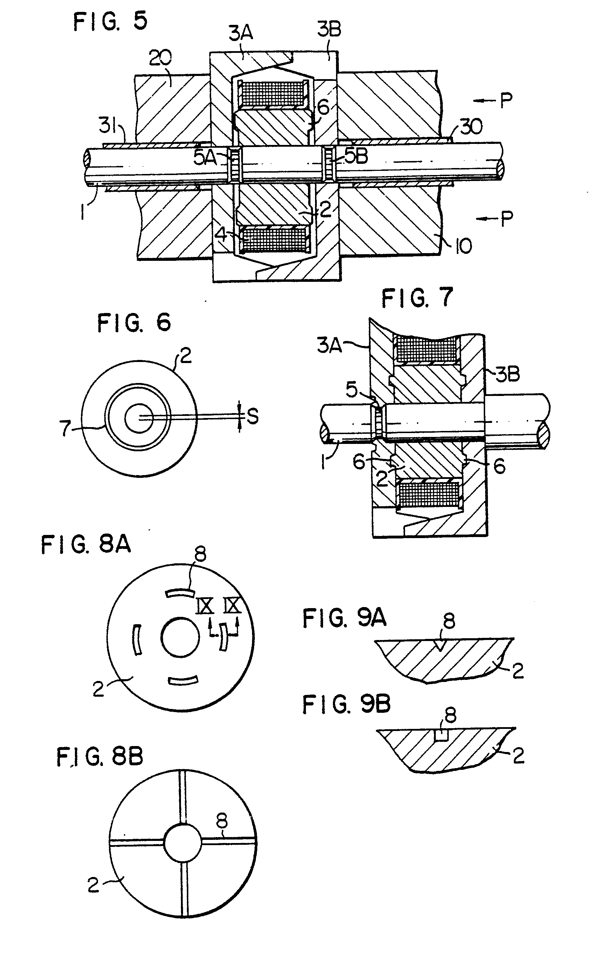

In the construction of this embodiment, the cylindrical yoke 2 is not secured directly to the rotary shaft 1, and therefore, as shown in Figs. 3 and 4, the sides of the cylindrical yoke 2 are provided with protrusions 6 as a stopper of relative rotational motion. The side surfaces other than the protrusions 6 are parallel to each other and normal to the shaft. The section of this protrusion may take various forms including rectangle, trapezoid and semicircle. In the case under consideration, as shown in Fig. 4 which is a sectional view taken in line IV—IV of Fig. 3, protrusions having a triangular section are formed. The angle θ of the apex of this protrusion 6 is suitably about 90 degrees and the height of the protrusion in the embodiment under consideration is about 5/100 of the thickness of the cylindrical yoke 2. The protrusions 6 may be formed easily by cutting during or after the cold rolling of the cylindrical yoke 2. An example of the method of manufacturing the rotor of Fig. 2 is shown in Fig. 5. In Fig. 5, nail-shaped magnetic poles 3A, 3B are arranged in opposed relation to each other on the sides of a cylindrical yoke 2 mounting on the outer periphery thereof a coil frame 4A containing a field coil 4, and the magnetic poles 3A, 3B are fitted on a rotary shaft 1. Under this condition, the assembly is pressed from the outside of the nail-shaped magnetic poles 3A, 3B by use of a pair of die members 10, 20. In this embodiment, the pressure P of about 30 tons is applied to the member 10 against the member 20, whereby the protrusions 6 of the cylindrical yoke 2 cause the plastic deformation of part of the inner sides of the nail-shaped magnetic poles 3A, 3B thereby to secure close coupling. The protrusions 6 are formed partially on the sides of the cylindrical yoke 2 and therefore prevent the yoke from rotating relatively with the nail-shaped magnetic poles. Then, by the method disclosed in DE—A—3.008.454, the parts of the nail-shaped magnetic poles 3A, 3B proximate to the shaft-receiving aperture are plastically deformed by annular pressing members 30, 31 from the sides of the nail-shaped magnetic poles 3A, 3B, so that the magnetic poles 3A, 3B flow into the cuts 5A, 5B of the rotary shaft 1 thereby to fix the same. In this way, the rotor of the construction shown in Fig. 2 is completed.

Fig. 6 shows another example of the form of the protrusions provided on the sides of the cylindrical yoke. The protrusions 7 provided on the sides of the cylindrical yoke 2 are annular in shape and are eccentric by S from the axial center of the cylindrical yoke 2. In the embodiment under consideration, the value of S is 0.1 to 0.3 mm. This eccentricity functions as a stopper of relative rotational motion of the cylindrical yoke 2. The protrusions 7 may take other shape than the circle such as ellipse or polygon, in which case the eccentricity is not required.

The protrusions 6 and 7 formed on the sides of the cylindrical yoke 2 are plastically coupled to the inner sides of the nail-shaped magnetic poles 3A, 3B thereby to fix the cylindrical yoke 2. The protrusion 6, which is formed on both sides of the cylindrical yoke 2 in Fig. 3, may alternatively be formed only on one side thereof. In the case where the nail-shaped magnetic poles are harder than the yoke, the protrusion 6 may be formed on the inner sides of the nail-shaped magnetic poles 3A, 3B instead of on the cylindrical yoke 2.

Another embodiment of the present invention is shown in Fig. 7. In this embodiment, the nail-shaped magnetic poles 3A, 3B are closely attached to the sides of the cylindrical yoke 2 loosely fitted on the rotary shaft 1. Only the nail-shaped magnetic pole 3A is coupled by being caulked to the cut portion 5 and is thus secured to the rotary shaft 1, whereas the cylindrical yoke 2 and the nail-shaped magnetic pole 3B are fixed by being held by the stepped portion of the rotary shaft 1 and the nail-shaped magnetic pole 3A.

The protrusion 6 (or protrusion 7 in Fig. 6) is formed on the sides of the cylindrical yoke 2 as shown in Fig. 3, so that the nail-shaped magnetic pole 3A, the cylindrical yoke 2 and the nail-shaped magnetic pole 3B are coupled to each other thereby to stop the relative motion of the nail-shaped magnetic pole 3B and the cylindrical yoke 2.

Unlike in the above-mentioned embodiment in which the relative motion is prevented by the protrusions 6, 7 formed on the cylindrical yoke 2, grooves may be cut in the cylindrical yoke 2 for the same purpose. An example of such stop grooves is shown in Figs. 8A, 8B. In Fig. 8A, arcuate grooves 8 having a center coincident to the rotational center are formed in the sides of the cylindrical yoke 2. In Fig. 8B, by contrast, grooves 8 are radially cut extending from the outer periphery of the cylindrical yoke 2 to the shaft-receiving aperture. These grooves may of course be cut in the same form as the protrusions shown in Figs. 3 and 6. Alternatively, the sides of the cylindrical yoke 2 may be formed uneven over the entire surface thereof. The shape of the grooves may take various forms, as in the case of the protrusion, including the triangle of Fig. 9A and the rectangle of Fig. 9B.

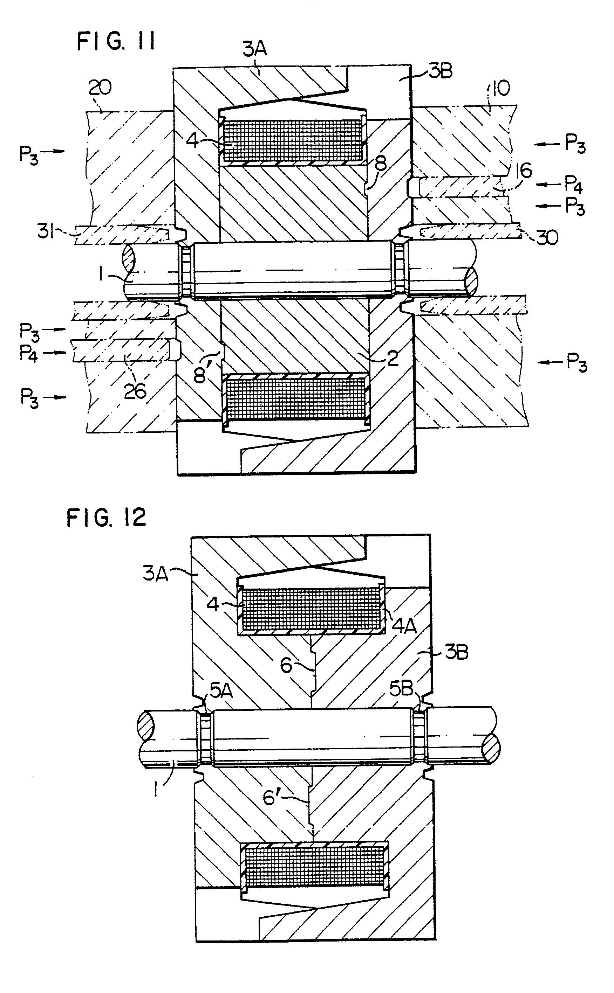

Now, a method of fabricating the rotor having a cylindrical yoke having such grooves is shown in Fig. 10. In this drawing, the component elements identical to those in Fig. 5 are designated by the same numerals as in Fig. 5. In Fig. 10, the pair of the die members 10, 20 in Fig. 5 are provided by a holder mold 10 and a receiving mold 20, and the holder mold 10 includes three concentric annular die members 12, 13 and 14.

In this method of fabrication, the cylindrical yoke 2 having a groove 8 is held by the nail-shaped magnetic poles 3A, 3B from the sides thereof, and the rotary shaft 1 is inserted in the manner described with reference to Fig. 5. Under this condition, the assembly is arranged in the recess 22 of the receiving mold 20. The holder mold 10 including the annular members 12, 13 and 14 is fitted in the recess 22. The pressure $P_1$ is applied to the receiving mold 20 by way of the members 12 and 14, while the pressure $P_2$ higher than $P_1$ is applied to the member 13 so that the part of the nail-shaped magnetic poles opposite to the grooves is plastically deformed to flow into the groove 8. This embodiment uses a cylindrical yoke 2 having an eccentric circular groove 8 similar in form to the protrusion 7 of Fig. 6 only on one side thereof, and this eccentric groove 8 is pressed by the annular member 13 thick enough to cover the side of the groove 8. Therefore, the pressing die members need not be formed eccentric like the groove 8. The method of fabricating the rotor using the annular members 12, 13 and 14 in Fig. 10 may be applied equally to the rotor having the cylindrical yoke 2 with radial grooves 8 as shown in Fig. 8B. In such a case, although the nail-shaped magnetic poles flow into only the part of the radial grooves 8 of Fig. 8B corresponding to the annular member 13 by plastic deformation, the relative rotational motion is prevented sufficiently.

In fabricating the rotor having the grooves in the sides of the cylindrical yoke, the process of Fig. 10 may be performed again on the other side of the yoke or two sets of the die members mentioned above may be used. An example of the latter method is shown in Fig. 11. In this figure, the cylindrical yoke 2 includes arcuate grooves 8 and 8' in the sides thereof. The die members 10, 20 include die members 16, 26 at positions corresponding to the grooves 8, 8' respectively. In this drawing, the same reference numerals as those in Fig. 5 or 10 designate the same component elements as in Fig. 5 or 10 respectively.

In the processes of fabrication, the pressure $P_3$ is applied by way of the die members 10, 20 from the sides of the assembly including the rotary shaft 1, the cylindrical yoke 2 and the nail-shaped magnetic poles 3A, 3B, while at the same time applying the pressure $P_4$ by way of the die members 16, 26.

The reason why the surface pressure $P_3$ is applied to the sides of the yoke 2 is that by doing so, the pole material does not flow in the surrounding or lateral directions, but flows securely into the cut portion 5B of the shaft 1 and the groove 8 by plastic deformation upon striking the members 16 and 30.

A rotor for AC generators according to another embodiment of the present invention is shown in Fig. 12. In this drawing, the coil frame 4A containing the field coil 4 is mounted in the space formed by a pair of the nail-shaped magnetic poles 3A, 3B, while the cylindrical yoke 2 included in the aforementioned embodiments is omitted. One nail-shaped magentic pole 3A is provided with radial protrusions 6 shown in Fig. 3 while the other nail-shaped magnetic pole 3B includes radial protrusions 6'. In the embodiment under consideration, the nail-shaped magnetic poles 3A and 3B have substantially the same hardness.

In fabrication, the nail-shaped magnetic poles 3A, 3B held together to contain the coil frame 4A wound with the field coil 4 is fitted on the rotary shaft 1, after which pressure is applied from the outside of the nail-shaped magnetic poles 3A, 3b by a pair of die members shown in Fig. 5. As a result, the inner sides of the other magnetic poles opposite to the protrusions respectively are subjected to plastic deformation thereby to secure the closely attached coupling surfaces.

The stop protrusions or grooves may be formed only in one of the nail-shaped magnetic poles such as 3A. In such a case, the nail-shaped magnetic pole 3A is preferably processed harder than the other magnetic pole 3b by selecting a material and/or a method appropriately.

It will be understood from the foregoing description of the embodiments that according to the present invention, since the cylindrical yoke 2 is fitted loosely on the rotary shaft 1, the nail-shaped magnetic poles 3A, 3B are firmly attached to the sides of the cylindrical yoke 2 without bending the rotary shaft 1, with the result that the sides of the cylindrical yoke 2 and the inner sides of the nail-shaped magnetic poles 3A, 3B are coupled closely to each other without any gap in the magnetic coupling surfaces therebetween. Consequently, the magnetic reluctance of the magnetic coupling surfaces is maintained low with a small magnetic loss, thereby leading to a lesser variation of the output characteristics of the generator. Also, the design with a margin of field magnetic fluxes is not required, thus reducing the side of the generator. Further, in view of the fact that the magnetic coupling surfaces are coupled to each other by plastic deformation, the cylindrical yoke 2 and the nail-shaped magnetic poles 3A, 3B may be sufficiently closely bonded to each other regardless of some deformations or dimensional errors of the surfaces thereof. An improved surface accuracy of the yoke or the magnetic poles is not required, thus improving the production efficiency. Furthermore, in the absence of the process of press-fitting the cylindrical yoke 2 and other components on the rotary shaft 1, the bend or elongation of the rotary shaft 1 which otherwise might be caused by the press-fitting process is completely saved, and a rotor very high in accuracy is obtained. In addition, the cylindrical yoke 2 is fixed completely on the nail-shaped magnetic poles 3A, 3B by the protrusion 6 or 7, or groove 8 or 8', thus improving the reliability of the rotor in high speed operation.

**Claims**

1. A method of manufacturing a rotor for AC generators, comprising the steps of:

forming the sides of a cylindrical yoke (2) substantially parallelly to each other, said yoke having an aperture to introduce a rotary shaft (1), and the diameter of the aperture being slightly larger than that of said rotary shaft so that said yoke is loosely fitting on said rotary shaft;

providing a pair of nail-shaped magnetic poles (3A, 3B) each thereof having an aperture to introduce said rotary shaft;

fitting said yoke (2) and said pair of magnetic poles (3A, 3B) on said rotary shaft (1) so that said pair of magnetic poles (3A, 3B) are arranged on the sides of said yoke (2); and

securing only said pair of magnetic poles (3A, 3B) to said rotary shaft (1); characterized in that a selected one of at least a protrusion and a groove (6) is formed on at least one of the sides of said yoke (2); and that said nail-shaped magnetic poles (3A, 3B) are pressed against said yoke (2) after said fitting whereby plastic deformation of part of said magnetic poles (3A, 3B) is caused by way of the selected one of the protrusion and the groove of said yoke (3A, 3B).

2. A method according to claim 1, further comprising the step of winding a field coil (4) on the outer periphery of said cylindrical yoke before the step of plastic deformation.

3. A method according to claim 1 or 2, wherein a plurality of a selected one of a protrusion and a groove are arranged radially on the side of said yoke.

4. A method according to claim 1 or 2, wherein the selected one of a protrusion and a groove is arcuate or is a circle (7) eccentric with respect to the center of said rotary shaft.

5. A method according to claim 1 or 2, wherein the selected one of a protrusion and a groove is substantially triangular in section.

6. A method according to claim 1 or 2, wherein said rotary shaft (1) has at least one annular cut portion (5), and the part of said magnetic poles (3A, 3B) coupled to said yoke (2) by plastic deformation is caused to flow into said cut portion of said rotary shaft (1) by plastic deformation thereby to secure said magnetic poles (3A, 3B) to said rotary shaft (1).

7. A method of manufacturing a rotor for AC generators, comprising the steps of:

forming the sides of a cylindrical yoke (2) substantially parallelly to each other, said yoke having an aperture to introduce a rotary shaft (1), and the diameter of the aperture being slightly larger than that of said rotary shaft so that said yoke is loosely fitting on said rotary shaft;

providing a pair of nail-shaped magnetic poles (3A, 3B) each thereof having an aperture to introduce said rotary shaft;

fitting said yoke (2) and said pair of magnetic poles (3A, 3B) on said rotary shaft (1) so that said pair of magnetic poles (3A, 3B) are arranged on the sides of said yoke (2); and

securing only one of said poles (3A) to said rotary shaft (1); characterized in that a selected one of at least a protrusion and a groove (6) is formed on both sides of said yoke (2); and that said nail-shaped magnetic poles (3A, 3B) are pressed against said yoke (2) after said fitting whereby plastic deformation of part of said magnetic poles (3A, 3B) is caused by way of the selected one of the protrusion and the groove of said yoke (3A, 3B).

8. A method of manufacturing a rotor for AC generators, comprising the steps of:

forming the inner sides of a pair of nail-shaped magnetic poles (3A, 3B) substantially perpendicular to the rotary axis, each of said magnetic poles having an aperture to introduce a rotary shaft (1);

fitting said pair of magnetic poles (3A, 3B) on said rotary shaft (1) so that the inner sides of said pair of magnetic poles (3A, 3B) oppose each other; and

securing said pair of magnetic poles to said rotary shaft; characterized in that a selected one of at least a protrusion and a groove (6) is formed in the inner side of at least one of said magnetic poles (3A, 3B); and that said pair of nail-shaped magnetic poles (3A, 3B) are pressed from outside thereof after said fitting whereby plastic deformation in part of the inner side of the other nail-shaped magnetic pole is caused by way of the selected one of said protrusion and said groove.

9. A method according to claim 8, wherein at least one protrusion (6) is formed on the inner side of each of said pair of the nail-shaped magnetic poles (3A, 3B).

10. A method according to claim 8 or 9, wherein the pair of said nail-shaped magnetic poles (3A, 3B) have substantially the same hardness.

**Revendications**

1. Procédé de fabrication d'un rotor pour générateurs de courant alternatif, comprenant les opérations de:

— formage des côtés d'une culasse cylindrique (2) sensiblement parallèlement l'un à l'autre, ladite culasse comportant un orifice pour l'introduction d'un arbre rotatif (1), le diamètre de l'orifice étant légèrement plus grand que celui dudit arbre rotatif de sorte que la culasse se monte avec jeu sur l'arbre rotatif;

— préparation d'une paire de pôles magnétiques à griffes (3A, 3B) comportant chacun un orifice pour l'introduction de l'arbre rotatif;

— montage de la culasse (2) et de la paire de pôles magnétiques (3A, 3B) sur l'arbre rotatif (1)

de sorte que les deux pôles magnétiques (3A, 3B) se trouvent de chaque côté de la culasse (2); et

— fixation seulement de ladite paire de pôles magnétiques (3A, 3B) à l'arbre rotatif (1); caractérisé en ce que sur au moins un des côtés de la culasse (2) est ménagé au moins un élément en saillie ou une gorge (6); et en ce que les pôles magnétiques à griffes (3A, 3B) sont pressés contre la culasse (2) après ledit montage, de façon à provoquer une déformation plastique d'une partie des pôles magnétiques (3A, 3B) du fait de l'élément en saillie ou de la gorge de la culasse (2).

2. Procédé suivant la revendication 1, comprenant en outre l'opération d'enroulement d'une bobine de champ (4) sur la périphérie extérieure de la culasse cylindrique, avant l'opération de déformation plastique.

3. Procédé suivant la revendication 1 ou 2, caractérisé en ce qu'une pluralité d'éléments en saillie ou de gorges est prévue radialement sur la côté de la culasse.

4. Procédé suivant la revendication 1 ou 2, caractérisé en ce que l'élément en saillie ou la gorge est courbe, ou bien est un cercle (7) excentré par rapport à l'axe de l'arbre rotatif.

5. Procédé suivant la revendication 1 ou 2, caractérisé en ce que l'élément en saillie ou la gorge a une section sensiblement triangulaire.

6. Procédé suivant la revendication 1 ou 2, caractérisé en ce que l'arbre rotatif (1) comporte au moins une partie annulaire décolletée (5), et la partie des pôles magnétiques (3A, 3B) accouplée à la culasse (2) par déformation plastique flue et pénètre dans cette partie décolletée de l'arbre rotatif (1) du fait de la déformation plastique, de manière à fixer les pôles magnétiques (3A, 3B) à l'arbre rotatif (1).

7. Procédé de fabrication d'un rotor pour générateurs de courant alternatif, comprenant les opérations de:

— formage des côtés d'une culasse cylindrique (2) sensiblement parallèles l'une à l'autre, ladite culasse comportant un orifice pour l'introduction d'un arbre rotatif (1), le diamètre de l'orifice étant légèrement plus grand que celui de l'arbre rotatif de sorte que la culasse se monte avec jeu sur l'arbre rotatif;

— préparation d'une paire de pôles magnétiques à griffes (3A, 3B) comportant chacun un orifice pour l'introduction de l'arbre rotatif;

— montage de la culasse (2) et de la paire de pôles magnétiques (3A, 3B) sur l'arbre rotatif (1), de sorte que les deux pôles magnétiques (3A, 3B) se trouvent de chaque côté de la culasse (2); et

— fixation seulement d'un des pôles (3A) à l'arbre rotatif (1);

caractérisé en ce qu'au moins un élément en saillie ou une gorge (6) est ménagé sur les deux côtés de la culasse (2); et en ce que les pôles magnétiques à griffes (3A, 3B) sont pressés contre la culasse (2) après ledit montage, de sorte que l'élément en saillie ou la gorge de la culasse (6) provoque une déformation plastique d'une partie des pôles magnétiques (3A, 3B).

8. Procédé de fabrication d'un rotor pour générateurs de courant alternatif, comprenant les opérations de:

— formage des côtés intérieurs d'une paire de pôles magnétiques à griffes (3A, 3B) sensiblement perpendiculairement à l'axe de rotation chacun des pôles magnétiques comportant un orifice pour l'introduction d'un arbre rotatif;

— montage de ladite paire de pôles magnétiques (3A, 3B) sur l'arbre rotatif (1), de sorte que les côtés intérieurs des deux pôles magnétiques (3A, 3B) soient en face l'un de l'autre; et

— fixation de la paire de pôles magnétiques à l'arbre rotatif;

caractérisé en ce qu'au moins un élément en saillie ou une gorge (6) est formé dans le côté intérieur d'au moins l'un des pôles magnétiques (3A, 3B); et en ce que les deux pôles magnétiques à griffes (3A, 3B) sont pressés à partir de leur côté extérieur après ledit montage, de sorte que l'élément en saillie ou la gorge provoque une déformation plastique d'une partie du côté intérieur de l'autre pôle magnétique à griffes.

9. Procédé suivant la revendication 8, caractérisé en ce que l'élément en saillie (6) est prévue sur le côté interne de chacune desdites paires de pôles magnétiques à griffes (3A, 3B).

10. Procédé suivant la revendication 8 ou 9, dans lequel les deux pôles magnétiques à griffes (3A, 3B) ont sensiblement la même dureté.

**Patentansprüche**

1. Verfahren zum Herstellen eines Läufers für Wechselstromgeneratoren, mit folgenden Schritten:

die Seitenflächen eines zylindrischen Joches (2) werden so geformt, daß sie im wesentlichen parallel zueinander sind, wobei das Joch eine Ausnehmung für die Aufnahme einer Welle (1) besitzt und der Durchmesser der Ausnehmung etwas größer ist als der der Welle, so daß das Joch lose auf der Welle sitzt,

es werden zwei nagelförmige magnetische Polstücke (3A, 3B) vorgesehen, die je eine Ausnehmung für die Aufnahme der genannten Welle besitzen;

das Joch (2) und die beiden magnetischen Polstücke (3A, 3B) werden derart auf die Welle (1) aufgesetzt, daß die beiden magnetischen Polstücke (3A, 3B) auf den Seiten des Joches (2) angeordnet sind, und

es werden an der Welle (1) nur die beiden Magnetpole (3A, 3B) befestigt, dadurch gekennzeichnet, daß auf mindestens einer der Seitenflächen des Joches (2) mindestens ein Vorsprung oder mindestens eine Nut (6) ausgebildet wird und daß nach dem Aufsetzen die nagelförmigen magnetischen Polstücke (3A, 3B) derart gegen das Joch (2) gepreßt werden, daß durch den Vorsprung oder die Nut des Joches ein Teil der magnetischen Polstücke (3A, 3B) plastisch verformt wird.

2. Verfahren nach Anspruch 1, dadurch gekennzeichnet, daß vor der plastischen Verformung eine Feldwicklung (4) um den Außenumfang des zylindrischen Joches gewickelt wird.

3. Verfahren nach Anspruch 1 oder 2, dadurch gekennzeichnet, daß auf der Seitenfläche des Joches eine Mehrzahl von Vorsprüngen oder Nuten vorgesehen sind.

4. Verfahren nach Anspruch 1 oder 2, dadurch gekennzeichnet, daß der Vorsprung oder die Nut bogenförmig ist oder die Form eines in Bezug auf die Mittellinie der Welle exzentrischen Kreises (7) hat.

5. Verfahren nach Anspruch 1 oder 2, dadurch gekennzeichnet, daß der Vorsprung oder die Nut im wesentlichen dreieckprofilförmig sind.

6. Verfahren nach Anspruch 1 oder 2, dadurch gekennzeichnet, daß die Welle (1) mindestens einen ringförmigen Einschnitt (5) besitzt und der durch plastische Verformung mit dem Joch (2) verbundene Teil der magnetischen Polstücke (3A, 3B) durch plastische Verformung veranlaßt, wird, in den Einschnitt der Welle (1) zu fließen, so daß die magnetischen Polstücke (3A, 3B) an der Welle (1) festgelegt werden.

7. Verfahren zum Herstellen eines Läufers für Wechselstromgeneratoren, mit folgenden Schritten:
die Seitenflächen eines zylindrischen Joches (2) werden so geformt, daß sie im wesentlichen parallel zueinander sind, wobei das Joch eine Ausnehmung für die Aufnahme einer Welle (1) besitzt und der Durchmesser der Ausnehmung etwas größer ist als der der Welle, so daß das Joch lose auf der Welle sitzt,
es werden zwei nagelförmige magnetische Polstücke (3A, 3B) vorgesehen, die je eine Ausnehmung für die Aufnahme der genannten Welle besitzen;
das Joch (2) und die beiden magnetischen Polstücke (3A, 3B) werden derart auf die Welle (1) aufgesetzt, daß die beiden magnetischen Polstücke (3A, 3B) auf den Seiten des Joches (2) angeordnet sind, und
es werden an der Welle (1) nur die beiden Magnetpole (3A, 3B) befestigt, dadurch gekennzeichnet, daß auf beiden Seiten des Joches (2) mindestens ein Vorsprung oder mindestens eine Nut (6) ausgebildet wird und daß nach dem Aufsetzen die nagelförmigen magnetischen Polstücke (3A, 3B) derart gegen das Joch (2) gepreßt werden, daß durch den Vorsprung oder die Nut des Joches ein Teil der magnetischen Polstücke (3A, 3B) plastisch verformt wird.

8. Verfahren zum Herstellen eines Läufers für Wechselstromgeneratoren, mit folgenden Schritten:
Die Innenseitenflächen von zwei nagelförmigen magnetischen Polstücken (3A, 3B) werden so geformt, daß sie zu der Drehachse im wesentlichen rechtwinklig sind, wobei jedes der magnetischen Polstücke eine Ausnehmung für die Aufnahme einer Welle (1) besitzt;
die beiden magnetischen Polstücke (3A, 3B) werden derart auf die Welle (1) aufgesetzt, daß die Innenseiten der beiden magnetischen Polstücke (3A, 3B) einander gegenüberliegen; und
die beiden magnetischen Formstücke werden an der Welle befestigt,
dadurch gekennzeichnet, daß in der Innenseite mindestens eines der magnetischen Polstücke (3A, 3B) mindestens ein Vorsprung oder mindestens eine Nut (6) ausgebildet wird und daß nach dem genannten Aufsetzen die beiden nagelförmigen magnetischen Polstücke (3A, 3B) von außen derart gepreßt werden, daß der Vorsprung oder die Nut eine plastische Verformung eines Teils der Innenseitenfläche des anderen magnetischen Polstückes bewirkt.

9. Verfahren nach Anspruch 8, dadurch gekennzeichnet, daß auf der Innenseitenfläche jedes der beiden nagelförmigen magnetischen Polstücke (3A, 3B) mindestens ein Vorsprung (6) ausgebildet wird.

10. Verfahren nach Anspruch 8 oder 9, dadurch gekennzeichnet, daß die beiden nagelförmigen magnetischen Polstücke (3A, 3B) im wesentlichen dieselbe Härte haben.

FIG. 1 PRIOR ART

3A
4A
3B
1
2
4

FIG. 2

3A
4A
5A
3B
6
5B
1
2
4

FIG. 3

IV
IV
2
6

FIG. 4

Q
6
h

FIG. 10

22
12
10
P₁
8
13
P₂
P₁
31
5A
5B
30
1
3A
4
5B
3B
P₁
P₂
14
P₁
20

1

FIG. 5

FIG. 6

FIG. 7

FIG. 8A

FIG. 9A

FIG. 9B

FIG. 8B

FIG. 11

FIG. 12